Europäisches Patentamt

European Patent Office

Office européen des brevets

(19)

(11) Numéro de publication : **0 377 672 B1**

# (12) FASCICULE DE BREVET EUROPEEN

(45) Date de publication du fascicule du brevet :
26.08.92 Bulletin 92/35

(21) Numéro de dépôt : **88909542.8**

(22) Date de dépôt : **12.10.88**

(86) Numéro de dépôt international :
**PCT/FR88/00504**

(87) Numéro de publication internationale :
**WO 89/03474 20.04.89 Gazette 89/09**

(51) Int. Cl.⁵ : **F02B 57/00**

(54) **MOTEUR A COMBUSTION INTERNE, A DISTRIBUTION ROTATIVE.**

(30) Priorité : **16.10.87 FR 8714287**

(43) Date de publication de la demande :
**18.07.90 Bulletin 90/29**

(45) Mention de la délivrance du brevet :
**26.08.92 Bulletin 92/35**

(84) Etats contractants désignés :
**AT BE CH DE FR GB IT LI LU NL SE**

(56) Documents cités :
**WO-A-87/01415**
**WO-A-87/03929**
**DE-B- 2 452 577**
**FR-A- 2 131 241**

(73) Titulaire : **PELLERIN, Jacques Paul Marie**
**59, boulevard de la République**
**F-91450 Soisy sur Seine (FR)**

(72) Inventeur : **PELLERIN, Jacques Paul Marie**
**59, boulevard de la République**
**F-91450 Soisy sur Seine (FR)**

(74) Mandataire : **Bouju, André**
**Cabinet Bouju Derambure (Bugnion) S.A. B.P.**
**6250**
**F-75818 Paris Cédex 17 (FR)**

**Description**

La présente invention concerne un moteur à combustion interne à distribution par obturateur rotatif.

Dans les moteurs à combustion interne à piston animé d'un mouvement alternatif, la distribution est habituellement assurée par des soupapes coulissantes commandées par came.

Ce dispositif est bruyant, sujet à l'usure, consommateur d'énergie, et n'offre aux gaz qu'une section de passage limitée. Pour augmenter la section de passage, il faut accroître la levée des soupapes, ce qui oblige à accroître la force des ressorts de rappel, et par conséquent à renforcer les organes de commande, ce qui accroît leur inertie et nécessite par conséquent d'accroître encore la force des ressorts de rappel On arrive donc rapidement à une limite au-delà de laquelle il faut envisager les systèmes à plus de deux soupapes par cylindre, solution coûteuse qui s'accompagne d'un surcroît de bruit et de frottements. Dans tous les cas, ce mode de distribution connu contraint à choisir pour la chambre de combustion des formes assez aplaties, non idéales, conditionnées par la nécessité de donner aux soupapes le plus grand diamètre possible et de prévoir entre soupapes et piston l'écart nécessaire à leur mouvement relatif lorsque le piston est au voisinage de son point mort haut.

Les documents DE-A- 33 27 810, FR-.A- 1 571 711 et US-A- 4 359 981 proposent de prévoir sur la culasse et sur le piston des faces qui se rapprochent fortement l'une de l'autre et chassent le gaz situé entre elles lorsque le piston atteint son point mort haut, de manière à créer des turbulences dans la chambre de combustion au moment de l'allumage. Ces turbulences sont censées accélérer la propagation de la combustion malgré les formes de la chambre plus ou moins favorables évoquées plus haut. Selon le DE-A-33 27 810, la forme de chambre demeure très plate. Selon le FR-A- 1 571 711 et le US-A - 435 981, la chambre est plus compacte mais ses parois définissent avec l'une au moins des soupapes en position d'ouverture des étranglements nuisibles à la respiration du moteur. De plus, l'enseignement des trois documents parait incompatible avec la présence de quatre soupapes par cylindres. L'enseignement de ces trois documents est donc globalement contraire à une bonne circulation des gaz dans le moteur.

Par ailleurs, la présence de cette face du piston qui se rapproche fortement d'une face correspondante de la culasse lorsque le piston est au point mort haut a des conséquences sur la répartition de pression sur le piston. Pendant la montée du piston, la pression est plus forte sur cette face du piston que sur le reste du piston. Pendant la combustion, c'est l'inverse, cette face est partiellement abritée du début de combustion. Il en résulte des couples de basculement sur le piston.

On connaît encore d'après le WO-A-87 01415 un moteur dont la distribution est assurée par une cloche adjacente à la face intérieure de la culasse et entraînée en rotation de manière qu'une lumière de la cloche découvre sélectivement des orifices d'admission et d'échappement. Les inconvénients résultant du mouvement alternatif des soupapes sont donc éliminés. La respiration du moteur est excellente. Toutefois, cette structure connue a encore des inconvénients. Il y est difficile d'augmenter le taux de compression tout en conservant à la chambre de combustion une forme favorable à la combustion. D'autre part, la cloche doit encaisser un choc important à chaque début de détente. Il a de plus été trouvé que la lumière prévue à travers cette cloche avait un inconvénient : la cloche n'est pas équilibrée autour de son axe de rotation et il peut en résulter des vibrations et des frottements très néfastes entre la surface extérieure de la cloche et la paroi fixe de la culasse. Le WO-87/01415 mentionne en sa figure 1 un état de la technique permettant de réaliser une chambre de combustion relativement compacte et'de limiter la pression sur le piston et la choche en début de détente, car une face de la cloche est adjacente à une face correspondante du piston lorsque celui-ci est au point mort haut. Mais ceci entraîne des couples de basculement sur le piston et sur la cloche et la cloche est particulièrement déséquilibrée autour de son axe de rotation.

Le but de l'invention est ainsi de proposer un moteur à distribution par cloche rotative dont le taux de compression puisse à volonté être choisi relativement élevé sans que le piston subisse des pointes d'efforts élevées ni des couples de basculement importants, et sans que la cloche soit ni soumise à des chocs ni déséquilibrée de manière significative autour de son axe de rotation.

L'invention vise ainsi un moteur à combustion interne comprenant au moins un cylindre dans lequel une chambre de travail est comprise entre un piston mobile en va-et-vient entre des points morts dits haut et bas et relié à un arbre de sortie par l'intermédiaire d'un mécanisme de transformation de mouvement, et une culasse équipée d'un orifice d'admission, d'un orifice d'échappement, et d'une cloche obturatrice, dont une face extérieure est adjacente à une face intérieure complémentaire appartenant à la culasse, la chambre de travail se réduisant à une chambre de combustion définie entre une face intérieure de la cloche et le piston lorsque le piston est à son point mort haut, le moteur comprenant en outre des moyens générateurs de combustion et des moyens pour entraîner la cloche en rotation synchronisée avec celle de l'arbre autour d'un axe par rapport auquel la forme de la face extérieure de la cloche est de révolution, de façon à faire communiquer sélectivement la chambre de travail avec les orifices d'admission et d'échappement à travers une lumière de la cloche, la chambre de travail étant délimitée autour de la face intérieure de la cloche par une face de progressivité de détente, tournée'vers le piston et adjacente au piston lorsque le piston est à son point mort haut, de manière à limiter la surface du piston qui est exposée à la pression des gaz lorsque le piston est au point mort haut.

Suivant l'invention, le moteur est caractérisé en ce que l'aire de la face de progressivité est répartie autour de l'axe du cylindre de manière à sensiblement annuler tout couple de basculement s'exerçant sur le piston autour de chaque axe perpendiculaire à l'axe du cylindre lorsque le piston est au point mort, en ce que la cloche comporte des moyens d'équilibrage des masses autour de son axe de rotation, et en ce que la face intérieure de la cloche comporte une région en forme générale de zone sphérique.

Ainsi, pour un volume donné, la chambre de combustion a une forme nettement plus compacte, pouvant être quasi parfaitement hémisphérique. Comme l'on sait, les chambres de combustion hémisphériques sont favorables au bon rendement des moteurs thermiques. Dans l'art antérieur, on qualifie souvent de "hémisphériques" les chambres de combustion en forme de dôme, assez éloignée d'une demi-sphère parfaite. L'invention permet de s'approcher beaucoup plus de la forme hémisphérique idéale. La combustion obtenue est donc d'excellente qualité. De plus, lorsque le piston est à son point mort haut, au début de la détente, une partie de sa surface est abritée de la pression des gaz. Ceci assure une application plus progressive de la pression des gaz sur le piston et sur la cloche, et par conséquent une moindre usure de la mécanisme pendant le fonctionnement, lequel est d'ailleurs moins bruyant et plus onctueux. De plus, la répartition de l'aire de la face de progressivité autour de l'axe du cylindre supprime sensiblement les couples de basculement sur le piston au point mort haut. La cloche étant équilibrée autour de son axe de rotation ne produit plus de vibrations et ne risque pas de s'user au contact de la culasse. Cet équilibage est relativement aisé à réaliser, compte tenu de la disposition proche de la symétrie qui résulte déjà de la répartition de la surface de progressivité autour de l'axe du cylindre.

D'autres particularités et avantages de l'invention ressortiront encore de la description ci-après.

Aux dessins annexés, donnés à titre d'exemples non limitatifs :

– la figure 1 est une vue générale, en coupe axiale, d'un moteur selon l'invention, avec le piston au point mort bas ;

– la figure 2 est une vue à échelle agrandie d'un détail de la figure 1, lorsque le piston est au point mort haut ;

– la figure 3 est une vue de dessous de la culasse ;

– la figure 4 est une vue en coupe selon la ligne IV-IV de la figure 3 ;

– la figure 5 est une vue partielle selon la flèche V de la figure 3 ;

– la figure 6 est une vue en coupe selon le plan VI-VI de la figure 2, lors d'un temps d'aspiration ;

– les figures 7 et 8 sont des vues en perspective de la cloche obturatrice, en coupe selon les plans VII-VII et VIII-VIII respectivement de la figure 10 ;

– la figure 9 est une vue de dessus de la cloche ;

– la figure 10 est une vue de dessous de la cloche ;

– la figure 11 est une vue en élévation et en coupe selon le plan VIII-VIII de la figure 10 ;

– les figures 12, 13, 15, 18 et 19 sont des vues analogues à la figure 11 mais concernant cinq variantes de réalisation de l'invention ;

– la figure 14 est une demi-vue en coupe selon le plan XIV-XIV de la figure 15 ;

– la figure 16 est une vue analogue à la figure 8 mais relative à la variante des figures 14 et 15 ; et

– la figure 17 est une vue schématique de dessous de la cloche des figures 14 à 16.

L'invention va être décrite ci-après dans son application à un moteur dit "en barillet".

Un tel moteur comprend un piston 1 mobile en va-et-vient dans un alésage cylindrique 2, qu'on appelera ci-après "cylindre" conformément à la terminologie usuelle pour les moteurs thermiques. Le cylindre 2 est formé dans une chemise 3 garnie intérieurement d'un revêtement anti-chaleur 4, par exemple un matériau du genre céramique, notamment celui vendu sous la marque "THERMOX".

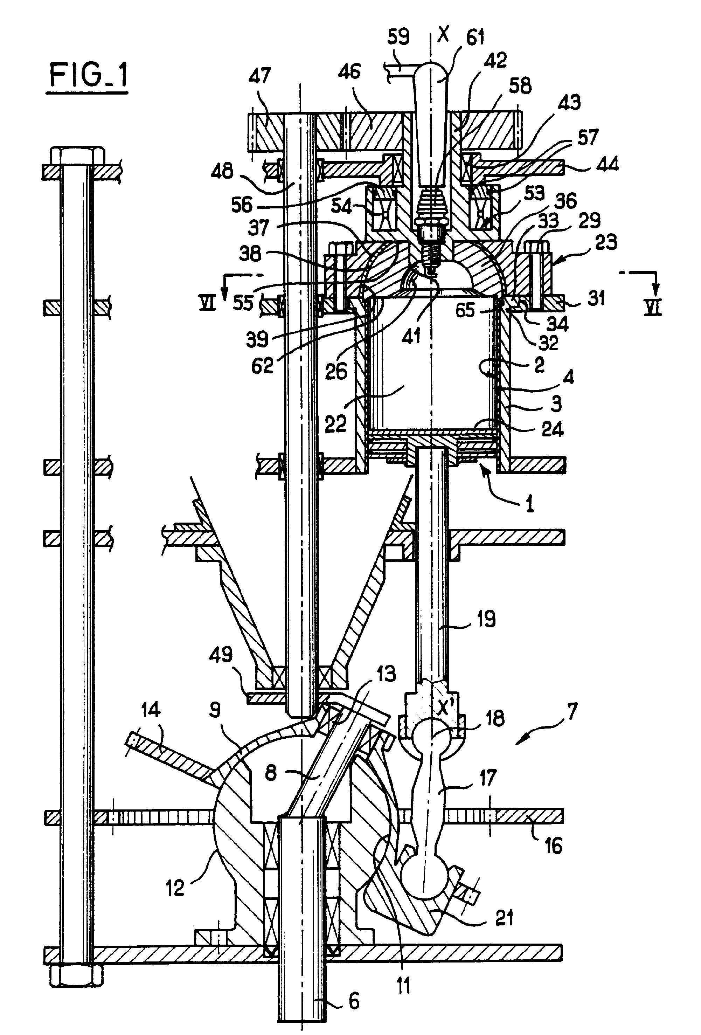

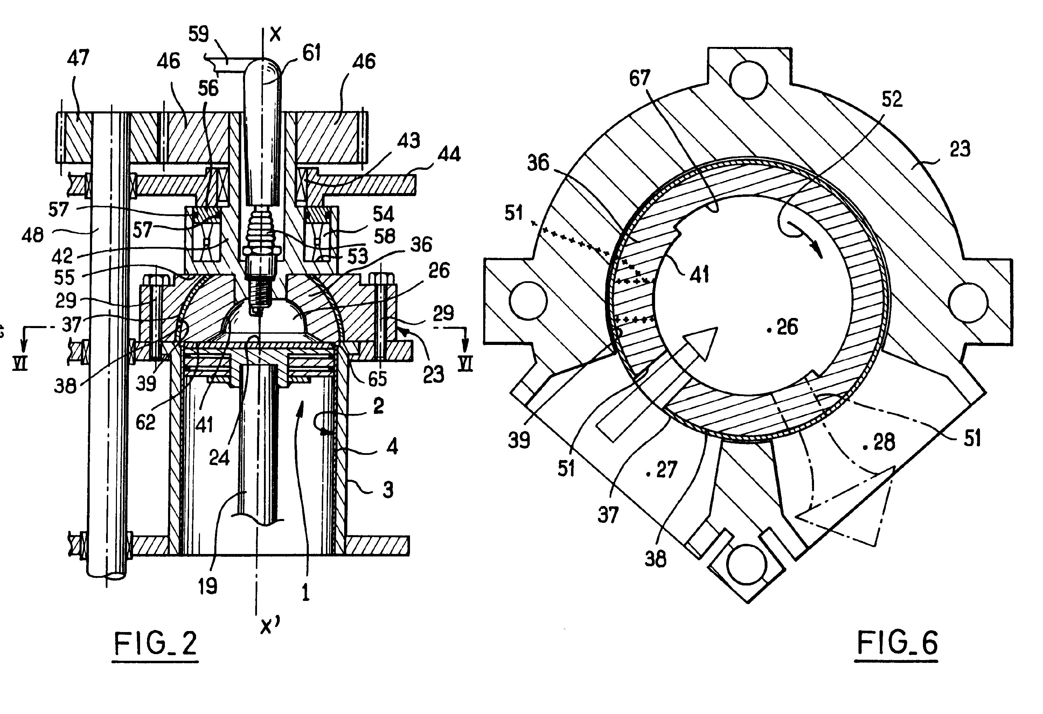

Le piston coulisse en va-et-vient selon l'axe XX' du cylindre entre la position dite de point mort bas représentée à la figure 1 et la position dite de point mort haut représentée à la figure 2. Le piston 1 est relié à un arbre de sortie 6 de la machine par l'intermédiaire d'un mécanisme de transformation de mouvement 7. Celui-ci comprend un maneton oblique 8 de l'arbre de sortie 6. Un chapeau 9 dont une surface sphérique 11 est en contact de rotule avec un support sphérique 12 fixé au bâti du moteur autour de l'arbre 6, est monté en libre rotation autour du maneton 8 au moyen d'un palier 13. Une couronne dentée extérieurement 14, solidaire du chapeau 9 et dont l'axe coïncide avec l'axe du maneton 8 engrène en permanence, en deux positions diamétralement opposées, avec une couronne dentée intérieurement 16 solidaire du bâti du moteur et dont l'axe coïncide avec l'axe de rotation de l'arbre 6. Cet engrènement détermine la position angulaire du chapeau 9 autour du maneton 8. Une bielle 17 a une extrémité 18 articulée par rotule avec une extrémité opposée au piston 1 d'une tige 19 liée rigidement au piston 1 selon l'axe XX'. L'autre extrémité de la bielle 17 est articulée par rotule à une oreille 21 portée latéralement par le chapeau 9. Le centre d'articulation par rotule de l'oreille 21 est située dans le plan moyen de la couronne dentée 14. De manière connue, le mécanisme 7 transforme le mouvement de détente du piston 1 en une fraction de tour de l'arbre 6, et transforme en mouvements d'échappement, d'aspiration et de compression du piston 1 la suite de la rotation de l'arbre 6 assurée par inertie d'un volant moteur et/ou par l'énergie de détente développée dans d'autres ensembles cylindre-piston. En effet, on n'a représenté à la figure 1 qu'un seul ensemble cylindre-piston, mais plusieurs tels ensembles peuvent être répartis autour de l'axe de l'arbre 6. Dans un tel cas, le chapeau 9 porte une oreille telle que 21 pour chaque ensemble cylindre-piston.

Une chambre de travail 22 est délimitée dans le cylindre 2 entre une culasse 23 et une face 24 du piston 1, opposée à la tige 19 et munie d'un revêtement anti-chaleur tel que le THERMOX. De manière classique, le piston 1 est relativement éloigné de la culasse lorsqu'il est au point mort bas (figure 1), la chambre de travail 22 ayant alors son volume maximal, et il en est relativement rapproché lorsqu'il est au point mort haut (figure 2), la chambre de travail se ramenant alors à une chambre de combustion 26 qui sera décrite plus en détail plus loin.

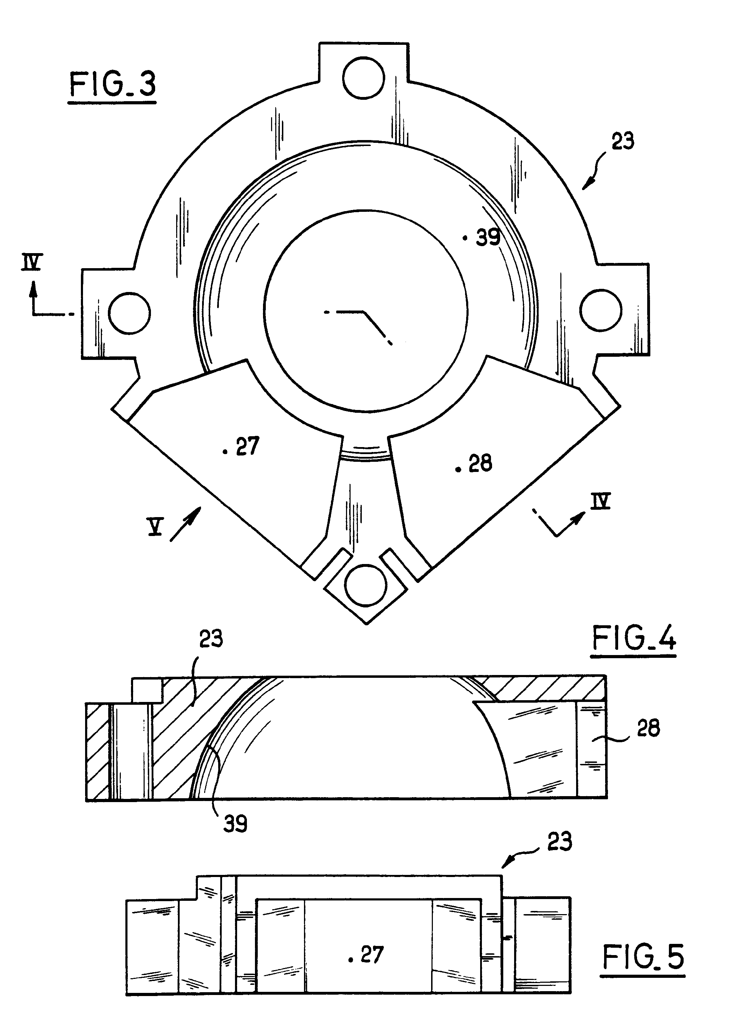

Comme le montrent les figures 3 à 6, la culasse 23 comporte un orifice d'admission 27 et un orifice d'échappement 28 en position convenable autour de l'axe XX'.De manière non représentée, les orifices 27 et 28 sont reliés à des moyens de carburation et respectivement à un collecteur d'échappement. La culasse 23 est fixée par des vis 29 à une plaque 31 appartenant au bâti du moteur. La chemise 3 est reçue dans un alésage 32 de la plaque 31. Une collerette supérieure 33 de la chemise 3 est verrouillée par la culasse 23 dans un contre-alésage 34 qui élargit l'alésage 32 du côté de la culasse 23.

Les échanges de gaz à travers les orifices 27 et 28 de la culasse 23 sont commandés par une cloche obturatrice 36 dont une face extérieure sphérique convexe 37, munie d'un revêtement anti-chaleur 38 tel que le THERMOX, est adjacente à une face intérieure complémentaire 39 appartenant à la culasse 23. Une face intérieure 41 de la cloche 36 délimite la chambre de combustion 26. Les surfaces sphériques 37 et 39 sont centrées sur l'axe XX', de sorte qu'elles sont de révolution autour de l'axe XX'.

Dans la cloche 36 est emmanché un arbre creux 42, d'axe XX', supporté en rotation autour de l'axe XX' par un palier 43 dans une plaque 44 solidaire du bâti du moteur. La cloche 36 est solidaire de l'arbre 42, notamment en rotation autour de l'axe XX'. Au-delà de la plaque 44, l'arbre 42 est lui-même solidaire en rotation d'un pignon 46 engrenant avec un pignon 47 solidaire en rotation d'un arbre central 48 d'entraînement des accessoires du moteur. L'arbre 48 est coaxial à l'arbre 6 et solidaire en rotation de ce dernier. Pour cela, l'arbre 48 est lié rigidement au maneton 8 par un bras 49. Le nombre de dents du pignon 46 est double de celui du pignon 47, de sorte que la vitesse de rotation de la cloche 36 dans la culasse 23 est moitié moindre que la vitesse de rotation de l'arbre 6.

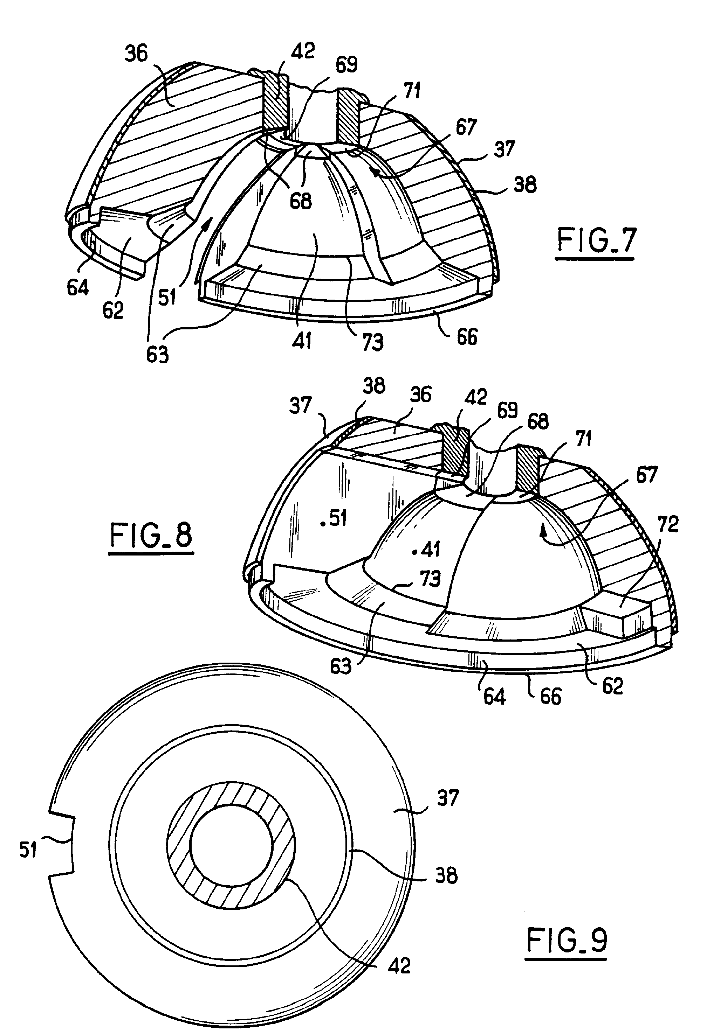

En raison de cette rotation, une lumière 51 prévue à travers la cloche 36 fait communiquer sélectivement la chambre de combustion 26 (figure 6) avec les orifices d'admission 27 et d'échappement 28. Dans la situation représentée en traits pleins à la figure 6, la chambre de combustion 26 communique avec l'orifice d'admission 27. Dans une autre situation représentée en trait mixte, la lumière 51 fait communiquer la chambre de combustion 26 avec l'orifice d'échappement 28. Dans une troisième situation représentée en traits croisés, la lumière 51 est écartée des deux orifices 27 et 28, de sorte que la cloche 36 isole la chambre 26 à l'égard des deux orifices 27 et 28. Le sens de rotation de la cloche 36 est figuré par la flèche 52.

Pour retenir la cloche 36 à l'égard des déplacements selon l'axe XX' en direction opposée au piston 1 malgré les pressions s'exerçant sur elle lors de la détente, l'arbre creux 42 porte au-dedà de la culasse 23 une cage annulaire 53 dans laquelle est montée une butée axiale à roulement. L'appui fixe de la butée axiale 54 est constitué par une bague 56 elle-même appuyée sur la plaque 44. La bague 56 est munie de joints d'étanchéité intérieur et extérieur 57 permettant à la cage 53 de contenir de l'huile de lubrification de la butée 54. La cage 53 présente une face inférieure plane 55 adjacente à une face supérieure plane de la culasse 23.

Dans l'arbre creux 42 est vissée une bougie d'allumage 58 qui s'étend selon l'axe XX'. La bougie 58 tourne donc avec la cloche 36. La bougie 58 est reliée au reste du circuit d'allumage 59 par une cosse 61 à contact tournant.

La structure du bâti du moteur ne sera pas décrite en détail car elle correspond sensiblement à l'exemple donné dans la demande de brevet française 85 18826 du 19 Décembre 1985 et dans la demande de brevet US 063 865 du 19 Juin 1987, au nom du Demandeur. En particulier, l'arbre 48 peut porter une ou plusieurs turbines de refroidissement.

Conformément à l'invention, autour de la chambre de combustion 26, la chambre de travail 22 est délimitée par une face 62 de progressivité de détente qui est tournée vers le piston 1 et qui est adjacente à la face de travail 20 du piston 1 lorque celui-ci est à son point mort haut (figure 2). Ainsi, dans cette position, qui est celle du début de détente, correspondant aux variations de pression les plus rapides, seule une partie de l'aire de la face 24 du piston est exposée à la pression. Le piston ne sera pleinement expose à la pression qu'après avoir parcouru une petite partie de sa course de détente.

On obtient ainsi une certaine progressivité dans l'application au piston des forces résultant de la combustion, ce qui réduit l'usure et accroît le confort d'utilisation.

De même au début de la détente, l'aire équivalente selon laquelle la pression s'applique sur la cloche 26 et tend à repousser celle-ci en direction opposée au piston ne correspond qu'à une partie de l'aire de section droite du cylindre 2. Ainsi, la butée axiale 50 bénéficie comme le piston d'une progressivité dans l'application de l'effort moteur.

De plus, l'aire de la surface de base de la chambre de combustion 26 est diminuée de l'aire de la face 62 par rapport à l'aire de section droite du cylindre 2. Ainsi, comme représenté aux figures 1 et 2, la chambre de combustion 26 a une dimension axiale relativement importante, ce qui permet de lui donner une forme hémisphérique quasi-parfaite, nettement plus compacte et homogène que celles des moteurs connus, et ce même si le taux de compression atteint 16 ou 17, valeur envisagée pour le fonctionnement en semi-diésel.

On va maintenant décrire plus en détail en référence aux figures 7 à 11 un premier mode de réalisation de la cloche selon l'invention.

Dans ce mode de réalisation, la face de progressivité 62 est portée par la cloche elle-même. Elle s'étend radialement entre un chanfrein 63 de forme conique assurant la liaison avec la face intérieure 41 délimitant la chambre de combustion 26, et un rebord cylindrique 64 dont le diamètre extérieur correspond au diamètre intérieur d'un contre alésage 65 de la chemise 3 à son extrémité supérieure, démunie du revêtement 4. En service, le rebord cylindrique 64 est emboîté libre en rotation dans l'extrémité de l'alésage de la chemise 3. Le rebord 64 a une surface d'extrémité plane 66 qui tourne au voisinage du bord supérieur du revêtement 4, lequel peut avoir environ 1 mm d'épaisseur. Le diamètre intérieur du rebord 64 correspond au diamètre intérieur de la région revêtue du cylindre 2. Ainsi, le rebord 64 entoure l'extrémité du piston 1 adjacente à la face 24 lorsque le piston 1 est au point mort haut (figure 2). Le rebord 64 assure un complément de guidage à la cloche 36 relativement au bord supérieur de l'alésage du cylindre 2 et l'étanchéité aux gaz entre la chambre de travail 22 d'une part et les orifices 27 et 28, et l'interstice entre les faces 37 et 39 d'autre part.

Pour éviter les vibrations de fonctionnement et les flexions de l'arbre 42, qui pourraient entraîner une usure rapide des faces 37 et 39 et des faces du rebord 64, il est prévu selon l'invention d'équilibrer autour de l'axe XX' les masses liées en rotation à la cloche 36. Il y a lieu en particulier d'éliminer le déséquilibre qui pourrait résulter de la lumière 51. Pour cela, la face 41 présente sur 180° également répartis de part et d'autre du plan axial médian de la lumière 51 (plan de coupe de la figure 8) un évidement 67. Cet évidement s'étend jusqu'au bas de la cloche 36, de sorte que le diamètre moyen du chanfrein 63 est accru au droit de cet évidement, et que la face de progressivité 62, toujours au droit de l'évidement 67, est rétrécie radialement.

Pour éviter que la cloche 36 ne subisse des couples de basculement autour d'axes perpendiculaires à l'axe XX', il est prévu que l'équilibrage des masses soit réalisé non seulement de manière globale, mais également dans chaque plan perpendiculaire à l'axe XX'. La profondeur radiale de l'évidement 67 est déterminée dans chaque plan à cet effet.

Comme le montre la figure 7, la lumière 51 est une échancrure pratiquée dans la face de progressivité 62, de même que dans le rebord 64 et le chanfrein 63. Ainsi, on simplifie la réalisataion et on assure une section de passage maximale pour les gaz. Toutefois, si rien n'est prévu, l'absence d'une partie de la face 62 au droit de l'échancrure 51 va créer un déséquilibre des efforts sur le piston et sur la cloche 36 lorsque le piston est au point mort haut, ce qui se traduirait par des couples de basculement s'exerçant sur ces éléments autour d'axes perpendiculaires à l'axe XX'.

Pour éviter cet effet générateur de frottement et d'usure, la cloche 36 présente en position diamètralement opposée à la lumière 51 un dégagement 72 pratiqué dans la face de progressivité 62 de manière à permettre à la pression de s'exercer sur le piston 1 et sur la cloche 36, en cet emplacement, lorsque le piston 1 est au point mort haut. Les dimensions du dégagement 72 sont déterminées pour sensiblement annuler tout couple de basculement s'exerçant sur le piston autour de chaque axe perpendiculaire à l'axe XX' du cylindre 2 lorsque le piston 1 est au point mort haut. En principe, ce résultat est atteint lorque l'intégrale des moments, autour d'un axe perpendiculaire à l'axe XX', des aires élémentaires manquantes en raison de l'évidement 72 et du rétrécissement de la face 62 au droit de l'évidement 67 est égale à l'intégrale des moments autour du même axe, des aires élémentaires manquantes dans la face 62 en raison de l'échancrure 51.

Comme le montrent encore les figures 7 et 8, la face d'extrémité de l'arbre 42, apparente dans la chambre 26, a une forme sphérique concave 68 assurant la continuité avec la forme sphérique concave de la face 41. Toutefois, pour augmenter la section de passage offerte aux gaz, l'échancrure 51 concerne egalement l'extrémité de l'arbre 42, de sorte que la face sphérique 68 de l'extrémité de l'arbre 42 est interrompue par une saignée 69. Pour que l'équilibrage des masses soit assuré dans chaque plan comme il a été dit plus haut, l'évidement 67 concerne lui aussi une région, désignée par 71, de l'extrémité de l'arbre 42, ce qui constitue une autre interruption de la face sphérique 68.

Dans l'exemple représenté aux figures 7 à 11, le plan de l'arête 73 raccordant la face 41, en dehors de l'évidement 67, avec le chanfrein 63 est un plan diamétral de la sphère à laquelle appartient la surface 41.

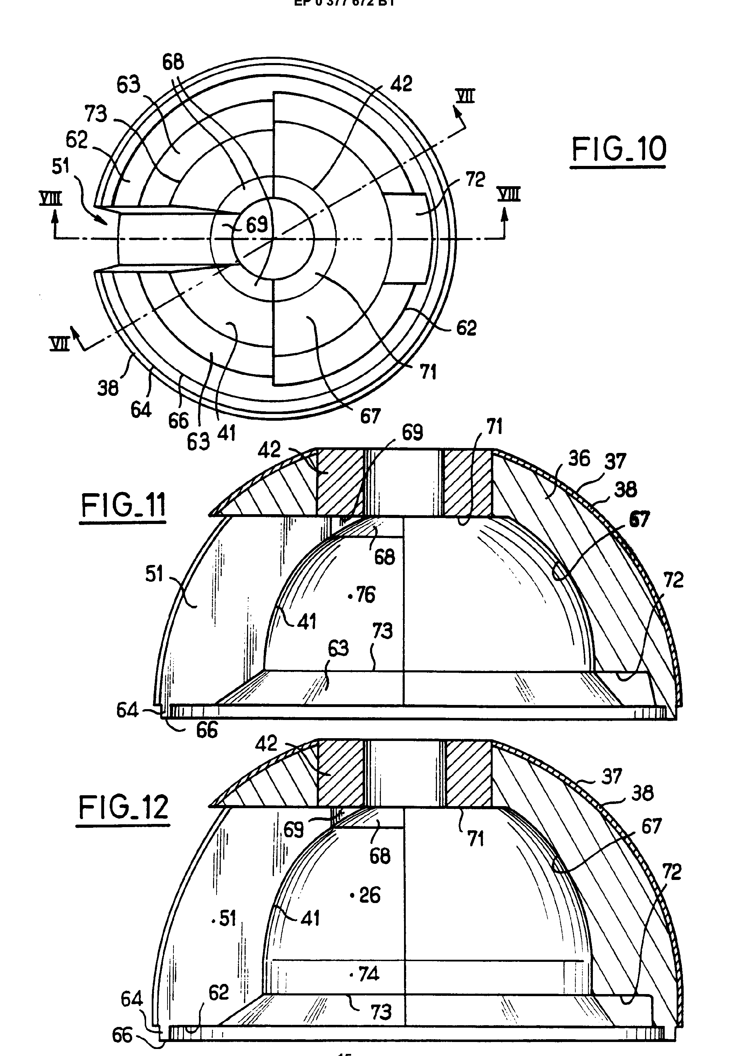

Dans l'exemple de la figure 12, identique par ailleurs à celui des figures 8 à 11, pour augmenter le volume de la chambre de combustion 26, une zone cylindrique 74 a été intercalée entre l'arête 73 et la partie sphérique de la face 41. Dans la région concernée par l'évidement 67, la région 74 a un diamètre accru et n'est plus nécessairement exactement cylindrique, en fonction des exigences de l'équilibrage des masses plan par plan.

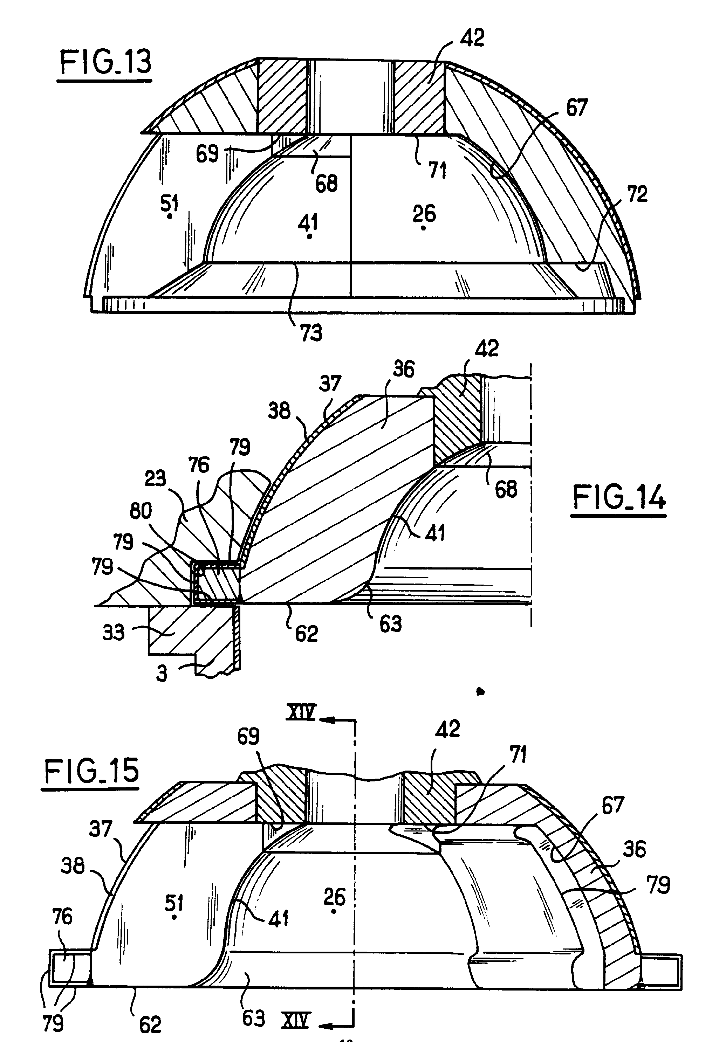

Dans l'exemple de la figure 13, en vue de réaliser au contraire une chambre de combustion 26 de volume réduit, la surface 41 n'est plus qu'une calotte sphérique dont le plus grand diamètre autour de l'axe XX', à savoir le diamètre de l'arête 73, est moindre que le diamètre de la sphère à laquelle elle appartient. Bien entendu, comme dans les exemples précédents, cette sphère partielle est en outre interrompue par la lumière 51 et par l'évidement 67.

L'exemple représenté aux figures 14 à 17 est identique à celui des figures 7 à 11 à l'exception des éléments qui vont être décrits ci-dessous.

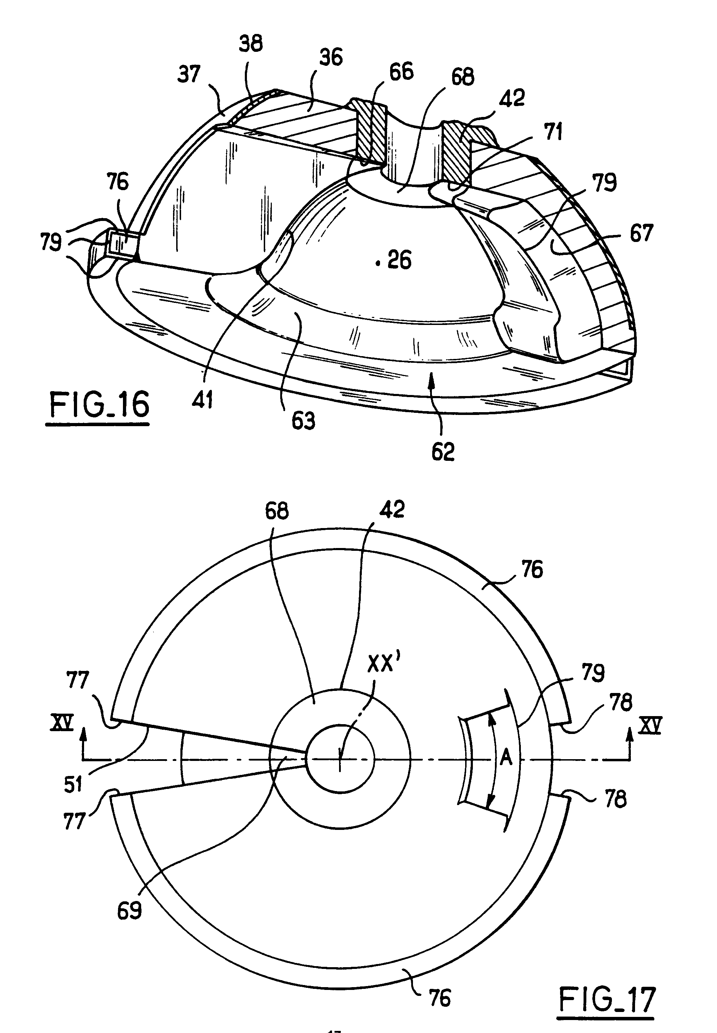

Pour limiter le nombre d'arêtes, susceptibles de constituer des points chauds en fonctionnement, le chanfrein 63 a un profil courbe. De plus, le rebord 64 dirigé vers le piston 1 est supprimé. Il est remplacé par deux collerettes partielles 76 (figure 17) dont chacune a une extrémité 77 dans le prolongement de l'une des faces latérales de l'échancrure 51. Pour des raisons d'équilibrage des masses autour de l'axe XX', les deux autres extrémités 78 des collerettes 76 présentent entre elles le même écartement que les extrémités 77.

Comme le montrent les figures 14 à 16, chaque collerette partielle 76 présente sur ces trois faces extérieures un revêtement anti-chaleur 79. La face intérieure des demi-collerettes 76 est soudée à la face 37 de la cloche 36, en position adjacente à la face de progressivité 62. En service, comme le montre la figure 14, les collerettes partielles 76 sont reçues dans un logement annulaire 80 de profil correspondant, prévu entre la culasse 23 et la collerette 33 de la chemise 3.

De plus, l'équilibrage des masses plan par plan n'est plus réalisé par variation de la profondeuer radiale de l'évidement 67. Au contraire, l'évidement 67 a une profondeur radiale constante, qui est maximale compte tenu de la résistance minimale que doit présenter la cloche 36 relativement à l'éclatement sous l'effet de la pression dans la chambre de combustion. L'équilibrage plan par plan est ici réalisé par variation de l'angle selon lequel s'étend l'évidement 67 autour de l'axe XX'. On a représenté à la figure 17 le contour théorique de l'évidement 67 sur la surface délimitant intérieurement la chambre de combustion dans la région évidée. Bien entendu, dans chaque plan perpendiculaire à l'axe XX', l'angle d'évidement, par exemple l'angle A dans un plan donné, est divisé en deux parties égales par le plan XV-XV de symétrie de l'échancrure 51, lequel plan passe par l'axe XX'.

Selon une autre particularité de ce mode de réalisation, l'aire selon laquelle l'évidement 67 débouche dans la face de progressivité 62 est déterminée de manière à assurer l'équilibrage des pressions sur le piston 1 et sur la cloche 16 de manière à annuler tout couple de basculement sur ces éléments. On n'a donc plus à pratiquer dans la cloche 16 un dégagement spécial en vue de cet équilibrage.

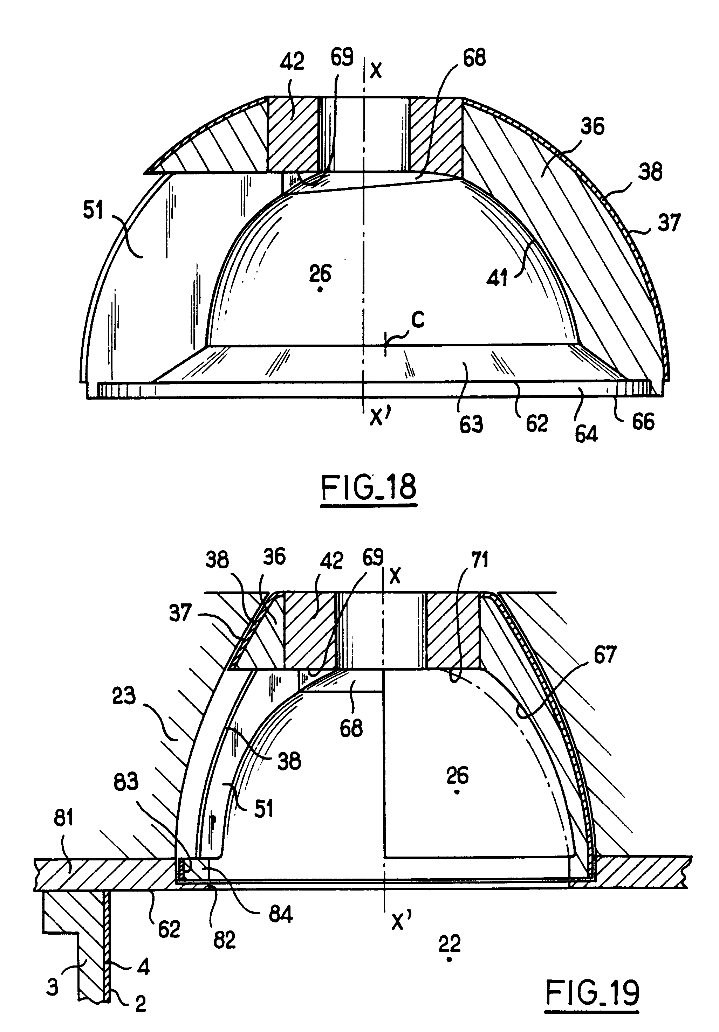

Dans le mode de réalisation de la figure 18, la face intérieure 41 de la cloche 36 a une forme sensiblement sphérique en tout point situé en dehors de la lumière 51. L'équilibrage des masses est réalisé par décalage du centre C de la sphère par rapport à l'axe XX' en direction opposée à l'évidement 51. Si l'on souhaite un équilibrage des masses plus soigné, on peut déterminer dans chaque plan la position du centre du cercle correspondant à l'intersection de la face 41 avec le plan considéré.

Grâce à ce décalage global ou plan par plan, l'axe du chanfrein conique 63 est également décalé de manière correspondante ce qui contribue à l'équilibrage des moments de basculement sur le piston et sur la cloche. Cet équilibrage peut être affiné en inclinant légèrement l'axe du chanfrein par rapport à l'axe XX'.

Ce mode de réalisation permet de conserver à la chambre de combustion 26 une forme très homogène malgré les nécessités d'équilibrage.

Dans le mode de réalisation de la figure 19, la face 62 est portée par une plaque 81 intercalée entre la chemise 3 et la culasse 21. La plaque 81 comporte un alésage circulaire 82 par lequel la chambre 26 communique avec la chambre de travail 22. L'alésage 82 est élargi, du côté de la cloche 16, par un contre-alésage 81 dans lequel est guidé un bord inférieur 84 de la cloche 36, lequel s'étend sur tout le pourtour de la cloche et en particulier n'est pas interrompu par la lumière 51.

L'évidement d'équilibrage 67 est du type décrit en référence aux figures 7 à 11, en ce sens que sa profondeur radiale est déterminée plan par plan, son amplitude angulaire étant de 180° dans tous les plans. Dans ce mode de réalisation, l'épaisseur radiale de la cloche est moindre que dans les modes de réalisation précédents, de sorte que la masse de matière absente en raison de la lumière 51 est moindre, et par conséquent, la profondeur radiale de l'évidement 67 est également moindre. La face de progressivité 62 a une dimension radiale qui est égale tout autour de l'axe XX', de sorte qu'aucune compensation n'est nécessaire à l'égard des moments de basculement.

La force axiale supportée en service par la cloche est moindre que dans les modes de réalisation précédents puisque, à tout moment, la pression ne s'exerce sur la cloche que selon l'aire de la section droite du cylindre 2 diminuée de l'aire de la face de progressivité 62.

Bien entendu, l'invention n'est pas limitée aux exemples décrits et représentés.

En particulier, la bougie pourrait être montée fixement dans la culasse en une position qui est découverte par la lumière 51 au moment propice à l'allumage.

D'autre part, la cloche pourrait comporter n lumières, et la culasse n lumières d'admission et n lumières d'échappement, tandis que la vitesse de rotation de la cloche telle que 36 dans la culasse telle que 23, serait égale à la vitesse de rotation de l'arbre tel que 48 divisée par 2n. De plus, lorsqu'il est prévu plus d'une lumière telle que 51, ces lumières sont identiques et également réparties angulairement autour de l'axe XX'. Il n'est donc plus nécessaire de prévoir les moyens d'équilibrage de masses autour de l'axe XX' et d'annulation des moments de basculement autour d'axes perpendiculaires à l'axe XX'.

Bien entendu, l'invention est applicable à d'autres types de moteur que le moteur en barillet, en particulier les moteurs à système bielle-manivelle.

**Revendications**

1. Moteur à combustion interne comprenant au moins un cylindre (2) dans lequel une chambre de travail (22) est comprise entre un piston (1) mobile en va-et-vient entre des points morts dits haut et bas et relié à un arbre de sortie (6) par l'intermédiaire d'un mécanisme de transformation de mouvement (7), et une culasse (23) équipée d'un orifice d'admission (27), d'un orifice d'échappement (28), et d'une cloche obturatrice (36) dont une face extérieure (37) est adjacente à une face intérieure complémentaire (39) appartenant à la culasse (23), la chambre de travail (22) se réduisant à une chambre de combustion (26) définie entre une face intérieure (41) de la cloche (36) et le piston (1) lorsque le piston est au point mort haut, le moteur comprenant en outre des moyens générateurs de combustion (58) et des moyens (42, 46 à 48) pour entraîner la cloche (36) autour d'un axe (XX') par rapport auquel la forme de la face extérieure (37) de la cloche (36) est de révolution, de façon à faire communiquer sélectivement la chambre de travail (22) avec les orifices à travers une lumière (51) de la cloche (36), la chambre de travail (22) étant délimitée, autour de la face intérieure (41) de la cloche, par une face (62) de progressivité de détente, tournée vers le piston (1) et adjacente au piston lorsque le piston (1) est à son point mort haut, de manière à limiter la surface du piston qui est exposée à la pression des gaz lorsque le piston est au point mort haut, caractérisé en ce que l'aire de la face de progressivité (62) est répartie autour de l'axe du cylindre (XX') de manière à sensiblement annuler tout couple de basculement s'exerçant sur le piston (1) autour de chaque axe perpendiculaire à l'axe (XX') du cylindre (2) lorsque le piston (1) est au point mort haut, en ce que la cloche (36) comporte des moyens (67) d'équilibrage des masses autour de son axe (XX') de rotation, et en ce que la face intérieure de la cloche (36) comporte une région en forme générale de zone sphérique.

2. Moteur conforme à la revendication 1, caractérisé en ce que la face de progressivité (62) est portée par la cloche (36).

3. Moteur conforme à la revendication 2, caractérisé en ce que la cloche présente un chanfrein (63) reliant la face de progressivité (62), avec la face intérieure (41) délimitant la chambre de combustion (26).

4. Moteur conforme à l'une des revendications 2 ou 3, caractérisé en ce que la lumière (51) est une échancrure pratiquée dans la face de progressivité (62), et en ce que la face de progressivité (62) présente au moins un dégagement (67, 72) d'équilibrage de pression, de manière à sensiblement annuler tout couple de basculement s'exerçant sur le piston (1) autour de chaque axe perpendiculaire à l'axe (XX') du cylindre (2) lorsque le piston (1) est au point mort haut.

5. Moteur conforme à l'une des revendications 1 à 3, caractérisé en ce que la lumière (51) est une échancrure pratiquée dans la face de progressivité (62), et en ce que, par rapport à l'axe (XX') du cylindre (2), la chambre de combustion (26) est décalée en direction opposée à l'échancrure (51).

6. Moteur conforme à l'une des revendications 1 à 5, caractérisé en ce que les moyens d'équilibrage des masses comprennent un évidement (67) que présente la paroi intérieure (41) de la cloche (36), délimitant la chambre de combustion (26).

7. Moteur conforme à la revendication 6, caractérisé en ce qu'en chaque plan perpendiculaire à l'axe de rotation de la cloche, une dimension (A) de l'évidement (67) est déterminée de manière que les masses soient équilibrées dans ce plan.

8. Moteur conforme à l'une des revendications 6 ou 7, caractérisé en ce que la lumière (51) est une échancrure pratiquée dans la face de progressivité (62), et en ce que l'évidement (67) de la paroi interne (41) de la cloche ((36) débouche dans la face de progressivité (62) de manière à sensiblement annuler tout couple de basculement s'exerçant sur le piston (1) autour de chaque axe perpendiculaire à l'axe (XX') du cylindre (1) lorsque le piston est au point mort haut.

9. Moteur conforme à l'une des revendications 1 à 8, caractérisé par des moyens (64, 76) de guidage de la cloche (36), qui positionnent un bord périphérique de la cloche (36) relativement au cylindre (2).

10. Moteur conforme à la revendication 9, caractérisé en ce que les moyens (64, 76) de guidage de la cloche (36) sont aménagés en moyens d'étanchéité entre la chambre de travail (22) d'une part et un interstice entre la culasse (23) et la cloche obturatrice (36) d'autre part.

**Claims**

1. Internal-combustion engine comprising at least one cylinder (2), in which a working chamber (22) is contained between a piston (1) reciprocable between so-called top and bottom dead centres and connected to an output shaft (6) by way of a movement-converting mechanism (7), and a cylinder head (23) equipped with an intake port (27), with an exhaust port (28) and with a shutter bell (36), an outer face (37) of which is adjacent to a complementary inner face (39) belonging to the cylinder head (23), the working chamber (22) being reduced to a combustion chamber (26) defined between an inner face (41) of the bell (36) and the piston (1) when the piston is at top dead centre, the engine also comprising combustion-generating means (58) and means (42, 46 to 48) for driving the bell (36) about an axis (XX') in relation to which the form of the outer face (37) of the bell (36) is one of revolution, so as selectively to put the working chamber (22) in communication with the ports via a slot (51) of the bell (36), the working chamber (22) being delimited about the inner face (41) of the bell by an expansion progression face (62) confronting the piston (1) and adjacent to the piston when the piston (1) is at its top dead centre, so as to limit the surface of the piston which is exposed to the pressure of the gases when the piston is at top dead centre, characterized in that the area of the progression face (62) is distributed about the axis (XX') of the cylinder, in such a way as substantially to cancel any tilting torque exerted on the piston (1) about each axis perpendicular to the axis (XX') of the cylinder (2) when the piston (1) is at top dead centre, in that the bell (36) has means (67) for balancing the masses about its axis of rotation (XX'), and in that the inner face of the bell (36) has a region in the general form of a spherical zone.

2. Engine according to Claim 1, characterized in that the progression face (62) is carried by the bell (36).

3. Engine according to Claim 2, characterized in that the bell has a chamfer (63) connecting the progression face (62) to the inner face (41) delimiting the combustion chamber (26).

4. Engine according to one of Claims 2 or 3, characterized in that the slot (51) is an indentation made in the progression face (62), and in that the progression face (62) has at least one pressure-balancing clearance (67, 72), so as substantially to cancel any tilting torque exerted on the piston (1) about each axis perpendicular to the axis (XX') of the cylinder (2) when the piston (1) is at top dead centre.

5. Engine according to one of Claims 1 to 3, characterized in that the slot (51) is an indentation made in the progression face (62), and in that the combustion chamber (26) is shifted relative to the axis (XX') of the cylinder (2) in a direction pointing away from the indentation (51).

6. Engine according to one of Claims 1 to 5, characterized in that the means for balancing the masses comprise a recess (67) located in the inner wall (41) of the bell (36) delimiting the combustion chamber (26).

7. Engine according to Claim 6, characterized in that, in each plane perpendicular to the axis of rotation of the bell, a dimension (A) of the recess (67) is determined in such a way that the masses are balanced in this plane.

8. Engine according to one of Claims 6 or 7, characterized in that the slot (51) is an indentation made in the progression face (62), and in that the recess (67) of the inner wall (41) of the bell ((36) opens through the progression face (62), so as substantially to cancel any tilting torque exerted on the piston (1) about each axis perpendicular to the axis (XX′) of the cylinder (1) when the piston is at top dead centre.

9. Engine according to one of Claims 1 to 8, characterized by means (64, 76) for guiding the bell (36) which position a peripheral edge of the bell (36) in relation to the cylinder (2).

10. Engine according to Claim 9, characterized in that the means (64, 76) for guiding the bell (36) are formed as sealing means between the working chamber (22) on the one hand and a gap between the cylinder head (23) and the shutter bell (36) on the other hand.

**Patentansprüche**

1. Motor mit interner Verbrennung und wenigstens einem Zylinder (2), worin zwischen einem Kolben (1), der zwischen einem sogenannten oberen und einem sogenannten unteren Totpunkt hin und her beweglich ist und über einen Bewegungsumformungsmechanismus (7) mit einer Ausgangswelle (6) verbunden ist, und einen Zylinderkopf (23) eine Arbeitskammer (22) enthalten ist, wobei der Zylinderkopf (23) mit einer Einlaßöffnung (27), einer Auslaßöffnung (28) und einer Verschlußglocke (36) versehen ist, wovon eine Außenfläche an eine dem Zylinderkopf (23) zugehörige komplementäre Innenflache angrenzt, wobei die Arbeitskammer (22) auf eine Verbrennungskammer (26) reduziert ist, die zwischen einer Innenfläche (41) der Glocke (36) und dem Kolben (1) definiert ist, wenn sich der Kolben im oberen Totpunkt befindet, wobei der Motor außerdem versehen ist mit Verbrennungserzeugungsmitteln (58) und Mitteln (42, 46 bis 48) zum Antreiben der Glocke (36) um eine Achse (XX′), in bezug auf die die Form der Außenseite (37) der Glocke (36) rotationssymmetrisch ist, derart, daß die Arbeitskammer (22) über ein Fenster (51) der Glocke (36) mit den Öffnungen selektiv verbunden wird, wobei die Arbeitskammer (22) entlang der Begrenzungslinie der Innenfläche (41) der Glocke durch eine Fläche (62) progressiver Druckentlastung begrenzt ist, die zum Kolben (1) weist und an den Kolben angrenzt, wenn sich der Kolben (1) in seinem oberen Totpunkt befindet, derart, daß die Oberfläche des Kolbens, die dem Gasdruck ausgesetzt ist, eingeschränkt ist, wenn sich der Kolben im oberen Totpunkt befindet, dadurch gekennzeichnet, daß der Flächeninhalt der Progessivitätsfläche (62) um die Zylinderachse (XX′) so aufgeteilt ist, daß jegliches Kippmoment, das auf den Kolben (1) um jede zur Achse (XX′) des Zylinders (2) senkrechte Achse wirkt, im wesentlichen beseitigt wird, wenn sich der Kolben (1) im oberen Totpunkt befindet, daß die Glocke (36) um ihre Rotationsachse (XX′) Massenausgleichsmittel (67) aufweist und daß die Innenfläche der Glocke (36) einen Bereich mit der allgemeinen Form einer sphärischen Zone aufweist.

2. Motor gemäß Anspruch 1, dadurch gekennzeichnet, daß die Progressivitätsfläche (62) von der Glocke (36) getragen wird.

3. Motor gemäß Anspruch 2, dadurch gekennzeichnet, daß die Glocke eine Fasenfläche (63) aufweist, die die Progressivitätsfläche (62) mit der die Verbrennungskammer (26) begrenzenden Innenfläche (41) verbindet.

4. Motor gemäß einem der Ansprüche 2 oder 3, dadurch gekennzeichnet, daß das Fenster (51) eine in der Progressivitätsfläche (62) ausgebildeter bogenförmiger Ausschnitt ist und daß die Progressivitätsfläche (62) weningstens einen Druckausgleichs-Freiraum (67, 72) aufweist, derart, daß jegliches Kippmoment, das auf den Kolben (1) um jede zur Achse (XX′) des Zylinders (2) senkrechte Achse wirkt, im wesentlichen beseitigt wird, wenn sich der Kolben (1) im oberen Totpunkt befindet.

5. Motor gemäß einem der Ansprüche 1 bis 3, dadurch gekennzeichnet, daß das Fenster (51) ein in der Progressivitätsfläche (62) ausgebildeter Ausschnitt ist und daß die Verbrennungskammer (26) in bezug auf die Achse (XX′) des Zylinders (2) in der zum bogenförmigen Ausschnitt (51) entgegengesetzten Richtung versetzt ist.

6. Motor gemäß einem der Ansprüche 1 bis 5, dadurch gekennzeichnet, daß die Massenausgleichsmittel eine Aussparung (67) umfasen, die in der die Verbrennungskammer (26) begrenzenden Innenwand (41) der Glocke (36) ausgebildet ist.

7. Motor gemäß Anspruch 6, dadurch gekennzeichnet, daß in jeder zur Drehachse der Glocke senkrechten Ebene eine Abmessung (A) der Aussparung (67) so bestimmt ist, daß die Massen in dieser Ebene ausgeglichen sind.

8. Motor gemäß einem der Ansprüche 6 oder 7, dadurch gekennzeichnet, daß das Fenster (51) eine in der Progressivitätsfläche (62) ausgebildeter Ausschnitt ist und daß die Aussparung (67) der Innenwand (41) der Glocke (36) in die Erhöhungsfläche (62) mündet, derart, daß jedes Kippmoment, das auf den Kolben (1) um jede zur Achse (XX′) des Zylinders (1) senkrechte Achse wirkt, im wesentlichen beseitigt wird, wenn sich der Kolben im oberen Totpunkt befindet.

9. Motor gemäß einem der Ansprüche 1 bis 8, gekennzeichnet durch Mittel (64, 76) zum Führen der Glocke (36), die einen Umfangsrand der Glocke (36) relativ zum Zylinder (2) positionieren.

10. Motor gemäß Anspruch 9, dadurch gekennzeichnet, daß die Mittel (64, 76) zum Führen der Glocke (36) als Dichtungsmittel zwischen der Arbeitskammer (22) einerseits und einem Spalt zwischen dem Zylinderkopf (23) und der Verschlußglocke (36) andererseits ausgebildet sind.

FIG_1

FIG_6

FIG_2

FIG.3

23

.39

IV

IV

.27

.28

V

FIG.4

23

39

28

23

.27

FIG.5

13

FIG.7

FIG.8

FIG.9

14

FIG.10

FIG.11

FIG.12

FIG.13

42
67
69
68
71
72
51
41
26
73

FIG.14

42
36
37
38
79
76
23
80
79
79
68
41
33
62
63
3

FIG.15

XIV
69
42
71
37
67
38
36
51
26
79
76
41
79
62
63
XIV

16

EP 0 377 672 B1

FIG.16

FIG.17

17

FIG_18

FIG_19

18